# EUROPÄISCHE PATENTANMELDUNG

(11) **EP 1 785 955 A1**
(43) Veröffentlichungstag der Anmeldung: **16.05.2007**
(21) Anmeldenummer: 06014997.8
(22) Anmeldetag: 19.07.2006
(51) Int. Cl.: G07F 7/10

(54) **Verfahren zur Freigabe des Zugriffs auf eine durch einen persönlichen Identifikationscode gesicherte Anwendung und/oder Einrichtung**

(30) Priorität: 11.11.2005 DE 102005053817
(71) Anmelder: Deutsche Telekom AG, 53113 Bonn (DE)
(72) Erfinder: Giessmann, Ernst G., Dr., 16548 Glienicke (DE); Moos, Rainer, 57080 Siegen (DE)

(57) **Zusammenfassung**

Der Erfindung liegt die Aufgabe zugrunde, ein Verfahren verfügbar zu machen, mit dem auf einfache Weise die Sperrung eines Sicherheitsmoduls bei Verlust eines persönlichen Identifikationscodes vermieden und/oder wieder aufgehoben werden kann.

Danach ist ein Verfahren zur Freigabe des Zugriffs auf eine durch einen persönlichen Identifikationscode gesicherte Anwendung und/oder Einrichtung vorgesehen.
Zunächst wird einem Benutzer ein Sicherheitsmodul (10) bereitgestellt, in welchem ein erster und wenigstens ein zweiter persönlicher Identifikationscode gespeichert sind, die der gesicherten Anwendung und/oder der gesicherten Einrichtung zugeordnet werden. Anschließend wird ein Datum zum Beispiel an einem Geldautomaten (100) eingegeben. Das eingegebene Datum wird mit den gespeicherten persönlichen Identifikationscodes verglichen. Der Zugriff auf die gesicherte Anwendung und/oder die gesicherte Einrichtung wird freigegeben, wenn das eingegebene Datum mit dem ersten oder dem zweiten gespeicherten persönlichen Identifikationscode übereinstimmt.

## Beschreibung

Die Erfindung betrifft ein Verfahren zur Freigabe des Zugriffs auf eine durch einen persönlichen Identifikationscode gesicherte Anwendung und/oder Einrichtung.

Ein persönlicher Identifikationscode, welcher eine persönliche Identifikationsnummer (Personal Identification Number, PIN) sein kann, enthält Daten, die nur ein legitimer Benutzer eines Sicherheitsmoduls oder eines Sicherheitsprozesses kennt, und die zur Authentifizierung (Verifikation) des Benutzers dient. Mit Hilfe einer PIN können unter Steuerung des Benutzers eine oder mehrere Aktionen des Sicherheitsmoduls oder der Sicherheitsprozesse freigegeben werden.

Um sogenannte Brute-Force-Angriffe auf einen solchen persönlichen Identifikationscode zu verhindern, sind in Sicherheitsmodulen Fehlbedienungszähler implementiert. Mit Hilfe des Fehlbedienungszählers wird die Anzahl der Versuche, einen persönlichen Identifikationscode zu erraten, beschränkt und somit eine hohe Sicherheitsstufe gewährleistet. Damit zufällige Fehleingaben nicht zu einem Totalausfall des zu schützenden Sicherheitsmoduls oder Sicherheitsprozesses führen, wird die maximale Anzahl der zulässigen Versuche, den richtigen persönlichen Identifikationscode einzugeben, üblicherweise zwischen drei und zehn gewählt. Durch die Wahl eines längeren persönlichen Identifikationscodes kann ohne Sicherheitsverlust die Anzahl der erlaubten Fehleingaben erhöht werden. Nach einer erfolgreichen Authentifizierung des legitimen Benutzers werden in der Regel die bis dahin registrierten Fehlversuche wieder auf den Anfangswert des Fehlbedienungszählers zurückgesetzt. Nach einer erfolgreichen Benutzerauthentifizierung sind neben der eigentlichen Aktion des Sicherheitsmoduls üblicherweise auch Kommandos, wie zum Beispiel "Change Password" und "Unblock Password" zulässig.

Für den Fall, dass der Benutzer seinen persönlichen Identifikationscode vergessen hat oder dieser aufgrund zu häufiger Fehleingaben gesperrt worden ist, existieren Maßnahmen, um auf das Sicherheitsmodul wieder zugreifen zu können. Hierbei kann ein sogenannter "Personal Unblocking Key", auch kurz PUK genannt, verwendet werden, mit dessen Hilfe der Fehlbedienungszähler wieder auf den Anfangswert zurückgesetzt und je nach Konfiguration auch ein neuer persönlicher Identifikationscode eingegeben werden kann.

Der vorliegenden Erfindung liegt nunmehr die Aufgabe zugrunde, ein Verfahren verfügbar zu machen, mit dem auf einfache Weise die Sperrung eines Sicherheitsmoduls bei Verlust eines persönlichen Identifikationscodes vermieden und/oder wieder aufgehoben werden kann.

Das oben genannte technische Problem wird mit den Verfahrensschritten des Anspruchs 1 gelöst.

Danach ist ein Verfahren zur Freigabe des Zugriffs auf eine durch einen persönlichen Identifikationscode gesicherte Anwendung und/oder Einrichtung vorgesehen. Bei der gesicherten Anwendung kann es sich beispielsweise um einen Prozess zur Durchführung einer elektronischen Signatur, eine elektronische Banküberweisung oder dergleichen handeln. Eine gesicherte Einrichtung ist beispielsweise ein tragbares Sicherheitsmodul, eine Tür oder eine andere elektronische Komponente, in welchen ein Sicherheitsmodul implementiert ist.

Ein Sicherheitsmodul, welches beispielsweise eine Chipkarte sein kann, wird einem Benutzer bereitgestellt. In dem Sicherheitsmodul sind ein erster und wenigstens ein zusätzlicher persönlicher Identifikationscode gespeichert, die der gesicherten Anwendung und/oder der gesicherten Einrichtung zugeordnet werden, um die Freigabe des Zugriffs darauf zu ermöglichen. Nunmehr gibt der Benutzer ein Datum, welches eine Buchstaben- und/oder Ziffernfolge sein kann, als seinen persönlichen Identifikationscode an einer Eingabeeinrichtung ein. Das eingegebene Datum wird mit den gespeicherten persönlichen Identifikationscodes verglichen. Je nach Implementierung kann der Vergleich im Sicherheitsmodul selbst oder in einer gesicherten Einrichtung, in die das Sicherheitsmodul einsetzbar ist, ausgeführt werden. Wenn das eingegebene Datum mit dem ersten oder dem wenigstens einen zusätzlichen gespeicherten persönlichen Identifikationscode übereinstimmt, wird der Zugriff auf die gesicherte Anwendung und/oder die gesicherte Einrichtung freigegeben.

Mit diesem besonderen Verfahren ist es nunmehr möglich, auf eine gesicherte Anwendung und/oder Einrichtung zugreifen zu können, auch wenn der Benutzer einen persönlichen Identifikationscode vergessen hat oder dieser in Folge von zahlreichen Fehleingaben gesperrt worden ist.

Eine vorteilhafte gesicherte Anwendung ermöglicht, gesperrte persönliche Identifikationscodes, die in dem Sicherheitsmodul gespeichert sind, wieder freizugeben. Dies wird dadurch erreicht, dass der Benutzer entweder den ersten oder den zusätzlichen persönlichen Identifikationscode eingibt und daraufhin die Anwendung zur Entsperrung von persönlichen Identifikationscodes freigeben kann. In diesem Fall spielt es keine Rolle, ob ein persönlicher Identifikationscode bei Einrichtung eines Sicherheitsmoduls anfänglich gesperrt oder nachträglich in Folge von zu vielen Fehleingaben gesperrt wird.

Um sicherstellen zu können, dass ein Sicherheitsmodul, welches eine Chipkarte oder eine elektronische Einrichtung, in der ein Sicherheitsmodul implementiert ist sein kann, noch unbenutzt ist, wird wenigstens der erste persönliche Identifikationscode vor erstmaliger Inbetriebnahme des Sicherheitsmoduls auf ein vorbestimmtes Datum, beispielsweise eine Folge von Nullen gesetzt, bei der alle Funktionen des Sicherheitsmoduls gesperrt sind. Wird das vorbestimmte Datum vom Benutzer eingegeben, wird zunächst geprüft, ob das eingegebene Datum mit dem ersten persönlichen Identifikationscode übereinstimmt. Wenn ja, ist sichergestellt, dass das Sicherheitsmodul noch nicht freigeschaltet worden ist. Anschließend wird das vorbestimmte Datum gelöscht und/oder durch den tatsächlichen, dem Benutzer zugeordneten persönlichen Identifikationscode ersetzt. Auf diese Weise wird sichergestellt, dass das Sicherheitsmodul nur ein einziges Mal freigeschaltet werden kann. Ein derartiges Verfahren ist aus der DE 195 07 044 T2 bekannt.

Auch die zusätzlichen im Sicherheitsmodul gespeicherten persönlichen Identifikationscodes können vor der erstmaligen Freischaltung des Sicherheitsmoduls auf ein vorbestimmtes Datum, vorzugsweise auf Null gesetzt werden.

Vorteilhafterweise können die zusätzlichen persönlichen Identifikationscodes nur freigeschaltet und/oder geändert werden, nachdem der erste persönliche Identifikationscode eingegeben und verifiziert worden ist. Der erste persönliche Identifikationscode wird demzufolge auch als reflexiver persönlicher Identifikationscode bezeichnet, während die zusätzlichen persönlichen Identifikationscodes als nicht reflexive persönliche Identifikationscodes bezeichnet werden. Dies bedeutet, dass mit den zusätzlichen persönlichen Identifikationscodes, auch wenn sie auf einen anfänglichen vorbestimmten Wert gesetzt worden sind, keine erstmalige Freischaltung des Sicherheitsmoduls erfolgen kann. Hingegen kann, wie bereits erwähnt, das bei der Herstellung des Sicherheitsmoduls als erster persönlicher Identifikationscode eingegebene vorbestimmte Datum ohne Verifikation des zusätzlichen persönlichen Identifikationscodes verändert werden.

Um die Einsatzmöglichkeiten des Verfahrens zu erhöhen, können dem ersten und dem wenigstens einen zusätzlichen persönlichen Identifikationscode vorbestimmbare gesicherte Anwendungen und/oder Einrichtungen zugeordnet werden.

Die Erfindung wird nachfolgend anhand eines Ausführungsbeispiels in Verbindung mit den beiliegenden Zeichnungen näher erläutert. Darin zeigen:
- Fig. 1: eine Chipkarte, in der die Erfindung verwirklicht ist und
- Fig. 2: einen Geldautomaten als beispielhafte gesicherte Einrichtung.

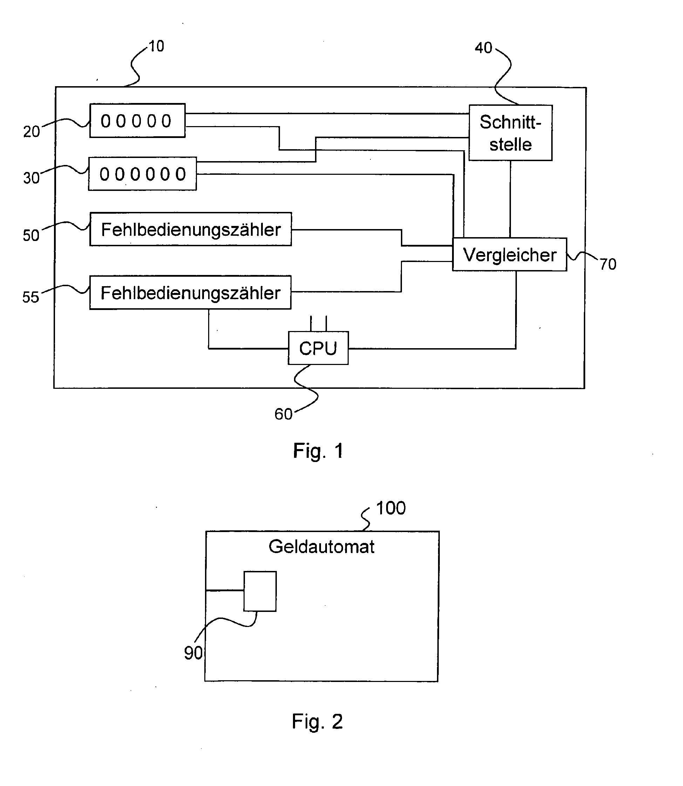

Fig. 1 zeigt ein beispielhaftes Sicherheitsmodul 10, welches im vorliegenden Ausführungsbeispiel eine Chipkarte ist. Die Chipkarte 10 enthält einen ersten Speicher 20, in dem ein erster persönlicher Identifikationscode, nachfolgend kurz Hauptcode genannt, abgelegt ist. Vor der erstmaligen Inbetriebnahme der Chipkarte 10 ist der Hauptcode im Speicher 20 auf Null gesetzt. Dieses Datum wurde beispielsweise während der Herstellung der Chipkarte 10 vom Hersteller eingegeben. Wenigstens ein weiterer Speicher 30 ist vorgesehen, in dem ein zweiter persönlicher Identifikationscode, nachfolgend kurz Hilfscode genannt, abgelegt ist. Auch hier sei angenommen, dass vor der ersten Inbetriebnahme des Sicherheitsmoduls 10 der Hilfscode ebenfalls auf den Wert Null gesetzt ist.

In bekannter Weise enthält die Chipkarte 10 eine Schnittstelle 40, über die die Chipkarte 10 mit einer in Fig. 2 gezeigten passwortgesicherten Einrichtung 100 kommunizieren kann. Die beispielhafte Chipkarte 10 weist ferner einen Vergleicher 70 auf, der eingangsseitig mit der Schnittstelle 40 und den beiden Speichern 30 und 20 verbunden sein kann. Weiterhin sind zwei Fehlbedienungszähler 50 und 55 in der Chipkarte 10 implementiert, die dem Speicher 20 bzw. 30 zugeordnet sind.

Die Fehlbedienungszähler 50 und 55 begrenzen die maximal zulässige Anzahl an Fehleingaben eines persönlichen Identifikationscodes. Hierzu kann der Fehlbedienungszähler 50 auf den Wert 3 gesetzt werden, d. h., es sind drei Versuche, den ersten persönlichen Identifikationscode richtig einzugeben, erlaubt. Wenn der im Speicher 30 abgelegte Hilfscode länger als der Hauptcode ist, kann der Fehlbedienungszähler auf einen größeren Wert als drei, zum Beispiel auf fünf gesetzt werden, ohne die Sicherheit der Chipkarte 10 zu reduzieren.

Die beispielhafte Chipkarte 10 weist ferner eine Steuereinheit 60, in Fig. 1 als CPU bezeichnet, auf, über die die Komponenten der Chipkarte 10 gesteuert und überwacht werden. Bei der in Fig. 2 gezeigten beispielhaften gesicherten Einrichtung 100 kann es sich um einen Geldautomaten handeln, der die üblichen gesicherten Anwendungen, wie zum Beispiel "Erstellen eines Kontoauszuges", "Geld abheben" und dergleichen ausführen kann.

An dieser Stelle sei erwähnt, dass es sich bei der Chipkarte 10 auch um eine Signaturkarte handeln kann, mit der ein Benutzer nach erfolgreicher Authentifizierung Dokumente elektronisch signieren kann.

Nachfolgend wird die Funktionsweise der Chipkarte 10 in Verbindung mit dem Geldautomaten 100 näher erläutert.

Es sei angenommen, dass der Benutzer die Chipkarte 10 erstmalig freischalten möchte. Hierzu schiebt der Benutzer die Chipkarte 10 in eine Kartenleseeinrichtung 90 des Geldautomaten 100 ein. Die Chipkarte 10 ist derart implementiert, dass eine erstmalige Freischaltung nur mit dem im Speicher 20 hinterlegten Hauptcode, der anfänglich auf Null gesetzt ist, erfolgen kann. Hierzu gibt der Benutzer über eine nicht dargestellte Tastatur des Geldautomaten 100 den anfänglichen Hauptcode 0000 ein, der über die Schnittstelle 40 dem Vergleicher 70 zugeführt wird. Da dieser anfängliche Hauptcode öffentlich bekannt ist, kann die Eingabe des Hauptcodes 0000 auch entfallen. Die CPU 60 sorgt dafür, dass der im Speicher 20 hinterlegte anfängliche Wert Null ebenfalls dem Vergleicher 70 zugeführt wird. Der Vergleicher 70 prüft die beiden Werte und stellt im vorliegenden Beispiel fest, dass der eingegebene Hauptcode und der im Speicher 20 abgelegte Wert übereinstimmen. Daraufhin schaltet die Steuereinheit 60 die Chipkarte 10 frei. Um zu vermeiden, dass die Chipkarte 10 mehrmals durch Eingabe des anfänglich als Hauptcode eingestellten Wertes 0000 freigeschaltet werden kann, wird der Inhalt des Speichers 20 nach der erstmaligen Freischaltung der Chipkarte 10 gelöscht und der Benutzer aufgefordert, seinen individuellen persönlichen Hauptcode einzugeben. Der Hauptcode kann eine Ziffern- und/oder Buchstabenfolge enthalten. Im vorliegenden Beispiel sei angenommen, dass der persönliche Hauptcode die Ziffernfolge 66543 enthält. Da zum gegenwärtigen Zeitpunkt der im Speicher 30 hinterlegte Hilfscode noch nicht freigeschaltet worden ist, kann gemäß einer vorteilhaften Ausführungsform die Funktionalität der Chipkarte 10 und die Funktionalität des Geldautomaten 100 lediglich über den im Speicher 20 hinterlegten Hauptcode aktiviert werden. Nachdem der Benutzer nunmehr seinen individuellen persönlichen Hauptcode 6543 erstmalig eingegeben hat, kann er auf die vom Geldautomaten 100 bereitgestellten Passwort-gesicherten Anwendungen zugreifen.

Um auch den dem Benutzer zugeordneten Hilfscode freigeben zu können, muss der Benutzer beispielsweise wiederum an der Tastatur des Geldautomaten 100 zunächst das dem Hauptcode entsprechende Datum 6543 eingeben, dass dann mit dem im Speicher 20 hinterlegten Hauptcode vergleichen wird. Bei erfolgreicher Verifizierung kann der Benutzer nunmehr den auf den Anfangswert Null gesetzten Speicher 30 durch den individuellen persönlichen Hilfscode des Benutzers überschreiben. Hierzu gibt der Benutzer über die Tastatur des Geldautomaten 100 zunächst den Wert 000000 ein. Da dieser anfängliche Hilfscode öffentlich bekannt ist, kann die Eingabe des Hilfscodes 000000 auch entfallen. Danach wird der Benutzer über eine Anzeigeeinrichtung des Geldautomaten 100 aufgefordert, den Hilfscode, der beispielsweise "PERSON" lautet, einzugeben. Nach Eingabe dieses Datums ist auch der nunmehr im Speicher 30 hinterlegte persönliche Hilfscode freigeschaltet und der Benutzer kann beispielsweise die Funktionalität des Geldautomaten auch über den Hilfscode freischalten. Dies bedeutet, dass der Benutzer, der auf die gesicherten Anwendungen des Geldautomaten 100 zugreifen möchte, die Zugriffsberechtigung erhält, indem er entweder den Hauptcode oder den Hilfscode eingibt.

Nunmehr sei ein weiteres Szenario angenommen, bei dem der Benutzer am Geldautomaten 100 dreimal den falschen Hauptcode eingeben wird. Bei jeder Falscheingabe verringert der Fehlbedienungszähler 50 den vorgegebenen Zählwert 3 um eins. Ist der anfängliche Zählwert auf drei gesetzt, wird nach drei Fehlbedienungen die Steuereinheit 60 den im Speicher 20 hinterlegten Hauptcode sperren, indem dieser beispielsweise einfach gelöscht wird. Die Freigabe oder erneute Eingabe des Hauptcodes ist nur nach vorheriger Eingabe des Hilfscodes PERSON und Verifikation im Vergleicher 70 möglich. Hierzu muss also der Benutzer zunächst den Hilfscode am Geldautomaten 100 eingeben. Stellt der Vergleicher 70 fest, dass das eingegebene Datum mit dem im Speicher 30 hinterlegten Hilfscode übereinstimmt, gibt die Steuereinheit 60 die Prozedur zur Freischaltung oder zur Neueingabe des Hauptcodes frei.

Gemäß einem alternativen Szenario kann für den Fall, dass der Benutzer den Hilfscode vergessen hat oder dieser nach fünfmaliger Fehleingabe gesperrt worden ist, eine Freischaltung des Hilfscodes auch über den Hauptcode, welcher im Speicher 20 abgelegt ist, erfolgen. Hierzu muss der Benutzer lediglich den Hauptcode eingeben, und nach Aufforderung entweder alten Hilfscode freischalten oder einen neuen Hilfscode eingeben.

Nach der erneuten Freischaltung einer bereits gesperrten persönlichen Identifikationsnummer wird der Zählwert des Fehlbedienungszählers wieder auf den anfänglichen Wert gesetzt.

Ein kürzerer Hauptcode wie 6543 hat den Vorteil, dass er schnell einzugeben ist. Er hat aber den Nachteil, dass er leicht beobachtbar und leicht zu vergessen ist. Ein längerer Hilfscode wie etwa "Mein kleiner Hut der hat drei Ecken" hat den Vorteil, dass er leicht einprägsam ist. Eine Eingabe eines so langen Hilfscodes ist schwer beobachtbar aber auch aufwändiger.

## Patentansprüche

1. Verfahren zur Freigabe des Zugriffs auf eine durch einen persönlichen Identifikationscode gesicherte Anwendung und/oder Einrichtung, mit folgenden Schritten:
Bereitstellen eines Sicherheitsmoduls (10) einem Benutzer, in welchem ein erster und wenigstens ein zusätzlicher persönliche Identifikationscode gespeichert sind, die der gesicherten Anwendung und/oder der gesicherten Einrichtung zugeordnet werden;
Eingeben eines Datums;
Vergleichen des eingegebenen Datums mit den gespeicherten persönlichen Identifikationscodes; und
Freigabe des Zugriffs auf die gesicherte Anwendung und/oder die gesicherte Einrichtung, wenn das eingegebene Datum mit dem ersten oder dem wenigstens einen zusätzlichen gespeicherten persönlichen Identifikationscode übereinstimmt.

2. Verfahren nach Anspruch 1,
**dadurch gekennzeichnet, dass**
mittels der gesicherten Anwendung gesperrte persönliche Identifikationscodes, die in dem Sicherheitsmodul gespeichert sind, freigeben werden.

3. Verfahren nach Anspruch 1 oder 2,
**dadurch gekennzeichnet, dass**
wenigstens der erste persönliche Identifikationscode vor Inbetriebnahme des Sicherheitsmoduls auf ein vorbestimmtes Datum gesetzt wird, dass
das Sicherheitsmodul nur bei Eingabe dieses vorbestimmten Datums freigeschaltet wird, und
dass anschließend das vorbestimmte Datum gelöscht wird und/oder durch den dem Benutzer zugeordneten persönlichen Identifikationscode ersetzt wird.

4. Verfahren nach Anspruch 3,
**dadurch gekennzeichnet, dass**
der wenigstens eine zusätzliche im Sicherheitsmodul gespeicherte persönliche Identifikationscodes erst nach Eingabe des ersten persönlichen Identifikationscodes freigeschaltet und/oder geändert werden können.

5. Verfahren nach einem der Ansprüche 1 bis 4,
**dadurch gekennzeichnet, dass**
der erste und der wenigstens eine zusätzliche persönliche Identifikationscode vorbestimmbaren gesicherten Anwendungen und/oder Einrichtungen zugeordnet wird.

6. Verfahren nach einem der Ansprüche 1 bis 5,
**dadurch gekennzeichnet, dass**
nach einer vorbestimmten Anzahl an Fehleingaben eines der persönlichen Identifikationscodes dieser gesperrt wird und durch wenigstens einen der nicht gesperrten persönlichen Identifikationscodes wieder freigeschaltet werden kann.
